# EUROPEAN PATENT APPLICATION

(11) **EP 4 819 415 A1**
(43) Date of publication of application: **07.10.2026**
(21) Application number: 26158539.2
(22) Date of filing: 13.02.2026
(51) Int. Cl.: H01R 43/20, H01R 43/28, H01B 13/012, H02G 1/12, B21F 23/00

(54) **ARRANGING CONDUCTORS FOR INSERTION INTO CONNECTORS**

(30) Priority: 06.03.2025 US 202519072578
(71) Applicant: The Boeing Company, Arlington, VA 22202 (US)
(72) Inventor: BLACKEN, Lars Eric, Arlington, 22202 (US); MCCASKEY, Jeffrey Alan, Arlington, 22202 (US); MITCHELL, Bradley James, Arlington, 22202 (US)
(74) Representative: Plasseraud IP

(57) **Abstract**

Examples are disclosed that relate to arranging a plurality of conductors (102) into a 2-dimensional (2D) spatial arrangement for insertion into a connector (112). One disclosed example provides a method of arranging the plurality of conductors (102). The method comprises positioning the plurality of conductors (102) within a plurality of gate stages (104) and closing each gate stage (104A) of the plurality of gate stages (104) to progressively move the plurality of conductors (102) into the 2D spatial arrangement.

## Description

### BACKGROUND

Cables can include connectors configured to be coupled mechanically and conductively to a complementary connector for transmission of data and/or power. Some cables include multiple conductors. The connector for a multi-conductor cable places the multiple conductors in a specific spatial arrangement, such as in a line or in a two-dimensional array, to connect to the complementary connector.

### SUMMARY

Examples are disclosed that relate to a method of arranging a plurality of conductors into a 2-dimensional (2D) spatial arrangement for insertion into a connector. The method comprises positioning the plurality of conductors within a plurality of gate stages. The method further comprises closing each gate stage of the plurality of gate stages to progressively move the plurality of conductors into the 2D spatial arrangement.

Another example provides an system for arranging a plurality of conductors into a 2D spatial arrangement for insertion into a connector. The system comprises a plurality of gate stages, each gate stage of the plurality of gate stages comprising a gate and a pushing structure. The system further comprises a controller configured to control closing of each gate stage of the plurality of gate stages to cause progressive movement of the plurality of conductors into the 2D spatial arrangement by the plurality of gate stages.

Another example provides an system for arranging a plurality of conductors into a 2D spatial arrangement for insertion into a connector. The system comprises a first gate stage comprising a first gate and a first pushing structure, wherein the first gate stage is configured to arrange the plurality of conductors into a row. The system further comprises a second gate stage comprising a second gate and a second pushing structure, wherein the second gate is configured to move a subset of conductors of the plurality of conductors in a first direction. The system further comprises a third gate stage comprising a third gate and a third pushing structure, wherein the third gate stage is configured to move at least one conductor of the subset of the plurality of conductors in a second direction transverse to the first direction.

The features, functions, and advantages of the disclosed examples can be achieved independently in various embodiments or can be combined in yet other embodiments. Further details of the method are disclosed herein with reference to the following description and drawings.

### BRIEF DESCRIPTION OF THE DRAWINGS

FIGS. 1A-1B schematically show an example system for arranging conductors for insertion into an example connector. Fig. 1B specifically shows an example of a 2D arrangement into which the conductors are arranged.
FIG. 2 shows a flow diagram that illustrates an example method for arranging a plurality of conductors into a 2D spatial arrangement.
FIGS. 3A-3H schematically illustrate an example of a progressive movement of a plurality of conductors into a 2D spatial arrangement.
FIG. 4 schematically illustrates an example computing system.

### DETAILED DESCRIPTION

During assembly of a multi-conductor cable, conductors of the multi-conductor cable are stripped and arranged in a predetermined specified orientation for insertion into a connector. Existing solutions for the arrangement of conductors can rely on manual conductor arranging and insertion, even when using automated equipment to strip the conductors. Manual arranging and insertion can be slow and susceptible to errors.

Accordingly, examples are disclosed that relate to the automated arrangement of conductors into a 2-dimensional, 2D, spatial arrangement for insertion into a connector. In one disclosed example, a system comprises a plurality of gate stages. Each gate stage of the plurality of gate stages comprises a gate and a pushing structure. Each gate comprises a plurality of slots, wherein each slot is configured to position a corresponding conductor wire when the corresponding conductor wire is pushed into the slot with the pushing structure of the gate stage. The plurality of gate stages are configured to progressively move the conductors into a 2D spatial arrangement and support the conductors for insertion into a connector. By automatically arranging and supporting conductors for insertion, cable manufacturing throughput can be increased while reducing a rate of quality defects.

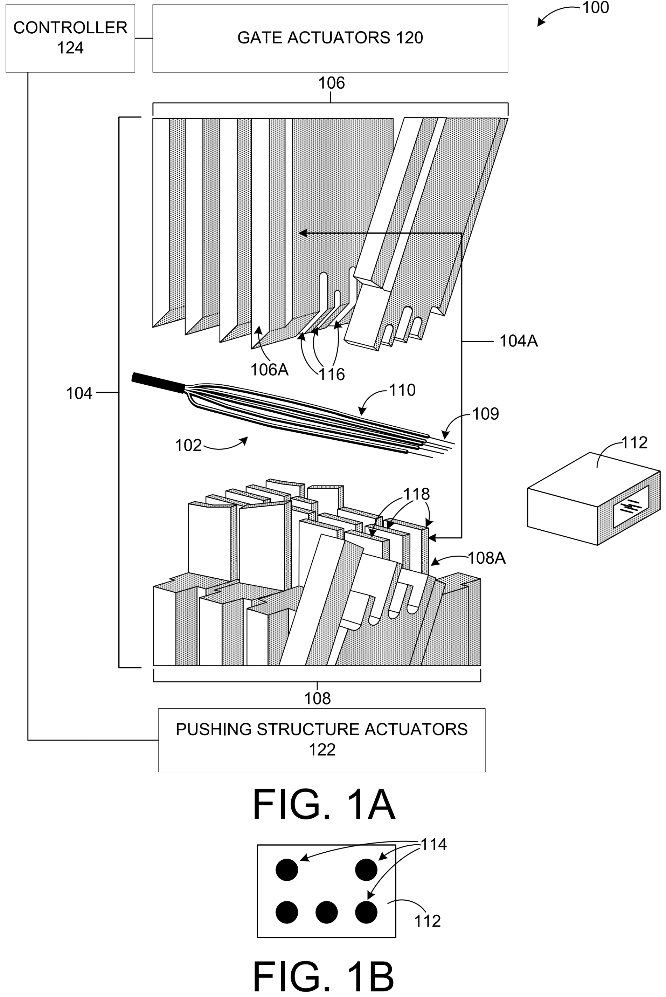

FIG. 1A schematically shows a system 100 for automatically arranging a plurality of conductors 102 into a two-dimensional spatial arrangement for insertion into a connector 112. The plurality of conductors 102 may include any number of conductors 102 between 2 and 10. The number of conductors 102 may also be any number of conductors 102 between 2 and 20. In some examples, the number of conductors 102 may be any number higher than 4. The system 100 comprises a plurality of gate stages 104 within which the plurality of conductors 102 are positioned. The plurality of gate stages may thus be equal to the number of the plurality of conductors. The plurality of gate stages 104 comprises gates 106 and pushing structures 108. Each gate stage of the plurality of gate stages 104 comprises a gate and a pushing structure. For example, gate stage 104A comprises a gate 106A and a pushing structure 108A. While the plurality of gate stages shown in FIG. 1A comprises five gate stages, any suitable number of gate stages can be used. The number of gate stages can be determined depending on the type of cable to be inserted into the connector.

As shown in FIG. 1A, an end portion (e.g., end portion 109) of each conductor of the plurality of conductors 102 has been previously stripped to remove an insulating sheath 110 from around the end portion to prepare for insertion into a connector 112. However, in other examples, the insulating sheath can be stripped from one or more conductors after arranging the plurality of conductors into the 2D arrangement.

FIG. 1B shows a schematic view of the connector 112. The connector 112 comprises a plurality of conductor receptacles 114 arranged in a 2D spatial arrangement. Connector 112 is shown with two rows of conductor receptacles 114 arranged in three columns. However, in other examples, the connector can comprise more than two rows of conductor receptacles 114. In other examples, the connector can comprise more than three columns of conductor receptacles 114. In other examples, the connector can comprise any other suitable 2D arrangement of conductor wire receptacles 114. For example, the conductor receptacles 114 may be arranged diagonally, forming shapes such as a V-shape or X-shape.

The plurality of gate stages 104 are configured to be progressively closed to move the plurality of conductors 102 into the 2D spatial orientation for insertion into the connector. The term "close," "closing," and variants thereof as used with reference to a gate stage refer to actuation of a gate stage in a manner that moves conductors of a multi-conducting wire into a destination position for that gate stage. Each of the gates 106 comprises a plurality of slots configured to progressively position the plurality of conductors 102. Each of the pushing structures 108 comprises a plurality of tines complementary to the plurality of slots. For example, gate stage 104A comprises a gate 106A comprising slots 116, and a pushing structure 108A comprising complementary tines 118. Complementary tines 118 are configured to push the plurality of conductors 102 into the slots 116 of gate 106A. The plurality of slots 116 and complementary plurality of tines 118 can be shaped to avoid damaging conductors during operation (e.g., lacking sharp edges that contact the conductors).

As the plurality of gate stages 104 are progressively closed, tines of each gate stage (e.g., tines 118 of pushing structure 108A) move into corresponding slots (e.g. slots 116 of gate 106A) to progressively move the plurality of conductors 102 toward the 2D arrangement required for insertion into the connector 112. The gates 106 and the pushing structures 108 also help to support and prevent buckling of the plurality of conductors 102 during insertion into the connector 112.

Gates 106 can be moved to open or close the gate stages of the plurality of gate stages 104 by a corresponding plurality of gate actuators 120. Alternatively or additionally, pushing structures 108 can be moved to open or close the plurality of gate stages 104 by a corresponding plurality of pushing structure actuators 122. In some examples, one or more of the gate actuators 120 or the pushing structure actuators 122 can comprise a mechanical mechanism (e.g., a motor and gear mechanism, such as a rack and pinion, or a pneumatic mechanism) that moves a gate and a pushing structure of a gate stage closer together. In other examples, a gate stage can have one or more of an electric actuator, a magnetic actuator, or a spring-driven actuator, and/or other mechanisms of controlling one or more of gate actuators 120 and/or pushing structure actuators 122. In such examples, closing each gate stage of the plurality of gate stages comprises pushing the plurality of conductors into a gate of the gate stages using mechanical actuation. In other examples, closing one or more gate stages of the plurality of gates can comprise pushing the plurality of conductors of a multi-conductor cable into a gate of the gate stages using a flow of gas. For example, a gate stage can have one or more pressurized gas outlets (e.g., gas nozzles) that each emit a flow of gas toward one or more conductors to move the conductors into a destination position for the gate stage.

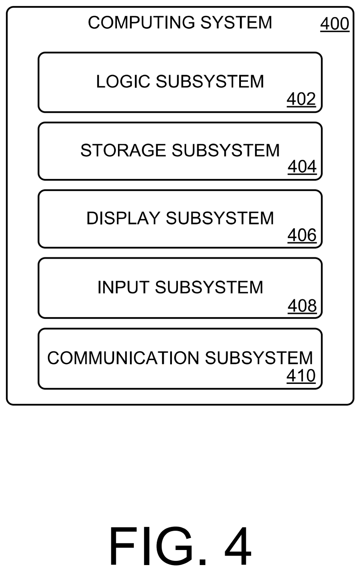

In some examples, the gate actuators 120 and the pushing structure actuators 122 are controlled by a controller 124. Controller 124 can take the form of any suitable type of computing device. Examples are described in more detail below with regard to FIG. 4. In other examples, gate actuators 120 and pushing structure actuators 122 can be manually controlled by an operator, rather than programmatically controlled by a controller.

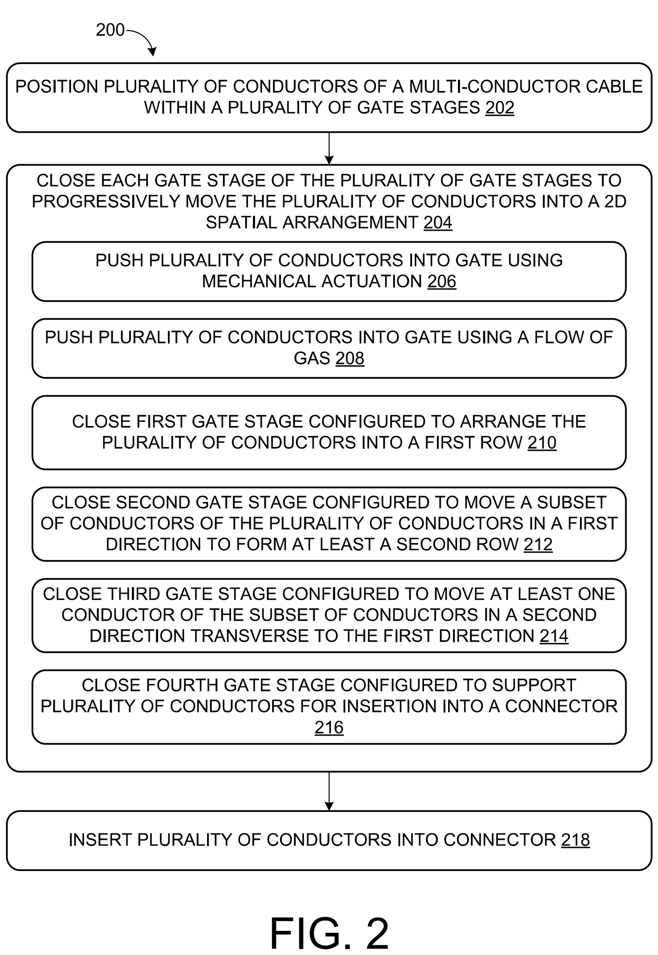

FIG. 2 shows a flow diagram illustrating an example method 200 of arranging a plurality of conductors in a 2D spatial arrangement for insertion into a connector. Method 200 comprises positioning a plurality of conductors of a multi-conductor cable within a plurality of gate stages, at 202. As described above, each gate stage of the plurality of gate stages comprises a gate and a pushing structure. Method 200 further comprises closing each gate stage of the plurality of gate stages to progressively move the plurality of conductors into a 2D spatial arrangement, at 204. In some examples, closing each gate stage of the plurality of gate stages comprises pushing the plurality of conductors into a gate of the gate stages using mechanical actuation, at 206. In other examples, closing one or more gate stages of the plurality of gates can comprise pushing the plurality of conductors of a multi-conductor cable into a gate of the gate stages using a flow of gas, at 208.

The movement of the plurality of conductors into the 2D spatial arrangement allows the conductors to be automatically inserted into a connector. In some examples, the conductors can be inserted into the connector by automatically advancing the multi-conductor cable toward the connector using an automated feeder and/or automatically advancing the connector toward the multi-conductor cable. In other examples, the connector can be manually moved onto the plurality of conductors of the multi-conductor cable.

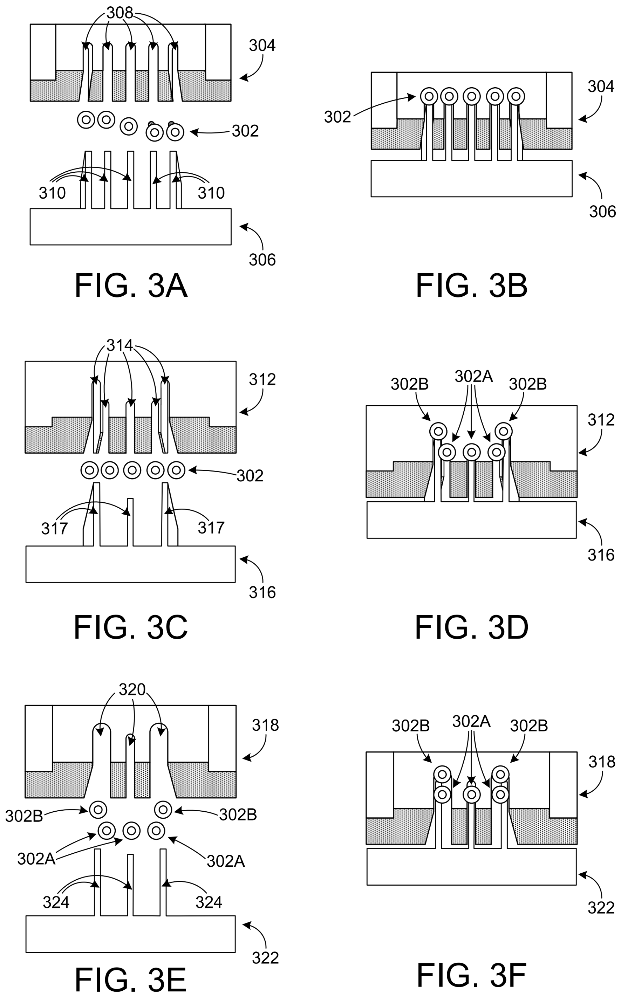

Closing each gate stage of the plurality of gate stages according to method 200 comprises closing a first gate configured to arrange the plurality of conductors into a first row 210. FIGS. 3A-3B show an example of closing a first gate configured to arrange a plurality of conductors into a first row by pushing the plurality of conductors into slots of the first gate using a mechanical pushing structure complementary to the first gate. More particularly, FIG. 3A shows conductors 302 placed between a first gate 304 and a first pushing structure 306. First gate 304 comprises a plurality of slots 308 arranged to horizontally isolate and move the conductors 302 into a first row. FIG. 3A also shows a first pushing structure 306 comprising complementary tines 310 arranged to push conductors 302 into the plurality of slots 308 in first gate 304. FIG. 3B shows the arrangement of conductors 302 after closing first gate 304 and first pushing structure 306. As shown, conductors 302 are arranged in the first row and are held in place within the plurality of slots 308 by the complementary tines 310. In other examples, the first gate can arrange the plurality of conductors in a different arrangement than a row.

Method 200 further comprises closing a second gate configured to move a subset of conductors of the plurality of conductors in a first direction to form at least a second row, at 212. FIGS. 3C-3D show an example of closing a second gate configured to move a subset of conductors of a plurality of conductors in a first direction to form at least a second row. In FIG. 3C, the conductors 302 are held in place in a first row by the first gate 304 and the first pushing structure 306 (not shown). A second gate 312 comprises slots of different heights 314 arranged to move a subset of the conductors 302 in a first direction to form at least a second row, and a second pushing structure 316 comprises a series of complementary tines 317 arranged to move the conductors 302 into the slots of different heights 314 of the second gate 312. In the depicted example, the slots of different heights 314 are configured to move the subset of the conductors 302 upward in a vertical direction. However, in other examples, a gate can be configured to move a subset of conductors in any other suitable direction. FIG. 3D shows the conductors 302 after closing the second gate 312 and the second pushing structure 316. As shown, a subset of conductors 302A are moved in a first direction to form a first row, and a subset of conductors 302B form a second row. The subsets of conductors 302A and 302B are held in place within the slots of different heights 314 by the complementary tines 317.

In some examples, method 200 further comprises closing a third gate configured to move at least one conductor of the subset of conductors in a second direction transverse to the first direction 214. FIGS. 3E-3F show an example of closing a third gate configured to move at least one conductor of a subset of conductors in a second direction transverse to the first direction. In FIG. 3E, the conductors 302 are held in place in a first row and in a second row by the second gate 312 and the second pushing structure 316 (not shown), as well as the first gate 304 and the first pushing structure 306 (not shown). A third gate 318 comprises slots 320 configured to move the subset of conductors 302B in a direction transverse to the first direction. In this example, the slots 320 in third gate 318 are slanted to move the subset of conductors 302B horizontally inward. However, in other examples, slots in a third gate may be slanted to move a subset of conductors horizontally outward, or in any other second direction transverse to the first direction. Returning to FIG. 3E, a third pushing structure 322 comprises a series of complementary tines 324 arranged to move the conductors 302 into slots 320 in the third gate 318. FIG. 3F shows the conductors 302 after closing third gate 318 and third pushing structure 322. As shown, the subset of conductors 302B are moved inward in a horizontal direction to align above the subset of conductors 302A, and held in place within the slots 320 by the complementary tines 324.

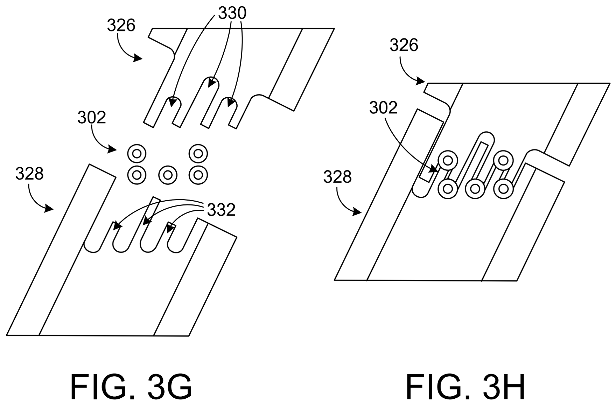

In some examples, method 200 further comprises closing a fourth gate configured to support the plurality of conductors for insertion into a connector 216. The conductors are subjected to compression forces during insertion into the connector. As such, the fourth gate stage may be used to support the conductors during insertion into the connector. While a fourth gate stage is disclosed for supporting conductors during insertion according to this example, any suitable gate stage can be used to support the plurality of conductors for insertion into the connector. For example, a first gate stage can be used to support the plurality of conductors for insertion, and subsequent gate stages can be employed for progressively orienting the plurality of conductors. Further, the number of gate stages can be determined depending on the number and type of conductors to be inserted, as mentioned above. FIGS. 3G-3H show an example of closing a fourth gate configured to support the plurality of conductors. First, FIG. 3G schematically shows a fourth gate 326, a fourth pushing structure 328, and conductors 302 held in place in a first and second row by the first, second, and third gate stages described above (not shown). Fourth gate 326 comprises slots 330 arranged to move and support conductors 302, and fourth pushing structure 328 comprises complementary tines 332 arranged to push conductors 302 into the slots in fourth gate 326. As shown, fourth gate 326 and fourth pushing structure 328 are angled to provide vertical and lateral support between the first and second rows of the conductors 302. FIG. 3H shows the conductors 302 after closing fourth gate 326 and fourth pushing structure 328. As shown, conductors 302 are arranged and supported by the angled gate stages for insertion into the connector. In this manner, the plurality of gate stages progressively move the conductors 302 into a 2D spatial arrangement for insertion into the connector. The angle of fourth gate 326 and fourth pushing structure 328 provides vertical and lateral support for the conductors 302, ensuring that the stripped ends of the conductors do not bend or touch when subjected to compression forces during insertion into the connector.

Returning to FIG. 2, method 200 further comprises inserting the plurality of conductors into the connector, at 218. As mentioned above, the conductors can be inserted into the connector either automatically or manually.

Method 200 thus allows a plurality of gate stages to be progressively closed to align and support a plurality of conductors of a multi-conductor cable for insertion into a connector, without requiring slow and ergonomically complex manual intervention. In some examples, a computer-vision-based system can be implemented after insertion into the connector to inspect and/or validate the position/condition of the conductors. After insertion into the connector, the gate stages can be opened to release the conductors from the gate stages. In some examples, the connector may be progressively advanced onto the conductors as the gate stages are opened.

As mentioned above, the gates and pushing structures disclosed herein can be controlled by a controller. FIG. 4 schematically shows a simplified representation of a computing system 400 configured to provide any to all of the computing functionality described herein. Computing system 400 may take the form of one or more network-accessible devices, personal computers, server computers, mobile computing devices, embedded computing devices, and/or other computing devices. Controller 124 is an example of computing system 400.

Computing system 400 includes a logic subsystem 402 and a storage subsystem 404. Computing system 400 may include a display subsystem 406, input subsystem 408, communication subsystem 410, and/or other subsystems not shown in FIG. 4.

Logic subsystem 402 includes one or more physical devices configured to execute instructions. For example, the logic subsystem 402 may be configured to execute instructions that are part of one or more applications, services, or other logical constructs. The logic subsystem 402 may include one or more hardware processors configured to execute software instructions. Additionally, or alternatively, the logic subsystem 402 may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 404 includes one or more physical devices configured to temporarily and/or permanently hold computer information such as data and instructions executable by the logic subsystem. When the storage subsystem includes two or more devices, the devices may be collocated and/or remotely located. Storage subsystem 404 may include volatile, nonvolatile, dynamic, static, read/write, read-only, random-access, sequential-access, location-addressable, file-addressable, and/or content-addressable devices. Storage subsystem 404 may include removable and/or built-in devices. When the logic subsystem executes instructions, the state of storage subsystem 404 may be transformed - e.g., to hold different data.

Aspects of logic subsystem 402 and storage subsystem 404 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem 402 and the storage subsystem 404 may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may be saved as one or more unexecuted modules on one or more suitable storage devices.

When included, display subsystem 406 may be used to present a visual representation of data held by storage subsystem 404. This visual representation may take the form of a graphical user interface (GUI). Display subsystem 406 may include one or more display devices utilizing virtually any type of technology. In some implementations, display subsystem may include one or more virtual-, augmented-, or mixed reality displays.

When included, input subsystem 408 may comprise or interface with one or more input devices. An input device may include a sensor device or a user input device. Examples of user input devices include a keyboard, mouse, touch screen, or game controller. In some embodiments, the input subsystem 408 may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 410 may be configured to communicatively couple computing system 400 with one or more other computing devices. Communication subsystem 410 may include wired and/or wireless communication devices compatible with one or more different communication protocols. The communication subsystem may be configured for communication via personal-, local- and/or wide-area networks.

Further, the disclosure comprises the following configurations:

A system for arranging a plurality of conductors into a 2-dimensional (2D) spatial arrangement for insertion into a connector, the system comprising:
a first gate stage comprising a first gate and a first pushing structure, wherein the first gate stage is configured to arrange the plurality of conductors into a row;
a second gate stage comprising a second gate and a second pushing structure, wherein the second gate stage is configured to move a subset of conductors of the plurality of conductors in a first direction to form a second row; and
a third gate stage comprising a third gate and a third pushing structure, wherein the third gate stage is configured to move at least one conductor of the subset of the plurality of conductors in a second direction transverse to the first direction.

The system may further comprise a controller configured to progressively close the first gate stage, the second gate stage, and the third gate stage.

The first pushing structure, the second pushing structure, and the third pushing structure of the system may each comprises one or more of a mechanical pushing structure or a gas outlet.

The controller of the system may be further configured to control one or more gate actuators configured to close the first gate of the first gate stage, the second gate of the second gate stage, and the third gate of the third gate stage.

The controller of the system may be further configured to control one or more pushing structure actuators configured to close the first pushing structure of the first gate stage, the second pushing structure of the second gate stage, and the third pushing structure of the third gate stage.

It will be understood that the specific embodiments or examples described above are not to be considered in a limiting sense, because numerous variations are possible. The actual scope of patent protection is defined by the appended claims.

The subject matter of the present disclosure includes all novel and non-obvious combinations and sub-combinations of the various processes, systems and configurations, and other features, functions, acts, and/or properties disclosed herein, as well as any and all equivalents thereof.

### Reference numbers:

system 100
plurality of conductors 102
plurality of gate stages 104
gate stage 104A
gates 106
gate 106A
pushing structures 108
pushing structure 108A
end portion 109
insulating sheath 110
connector 112
conductor receptacles 114
slots 116
complementary tines 118
gate actuators 120
pushing structure actuators 122
controller 124
example method 200
steps 202, 204, 206, 208, 210, 212, 214, 216, 218
conductors 302
subset of conductors 302A
subset of conductors 302B
first gate 304
first pushing structure 306
plurality of slots 308
complementary tines 310
second gate 312
slots of different heights 314
second pushing structure 316
complementary tines 317
third gate 318
slots 320
third pushing structure 322
complementary tines 324
fourth gate 326
fourth pushing structure 328
slots 330
complementary tines 332
computing system 400
logic subsystem 402
storage subsystem 404
display subsystem 406
input subsystem 408
communication subsystem 410

## Claims

1. A method (200) of arranging a plurality of conductors (102) in a 2-dimensional, 2D, spatial arrangement for insertion into a connector (112), the method (200) comprising:
positioning the plurality of conductors (102) within a plurality of gate stages (104); and
closing each gate stage (104A) of the plurality of gate stages (104) to progressively move the plurality of conductors (102) into the 2D spatial arrangement.

2. The method of claim 1, wherein said closing each gate stage (104A) of the plurality of gate stages (104) comprises closing a first gate stage configured to arrange the plurality of conductors into a first row.

3. The method of claim 2, wherein said closing each gate stage (104A) of the plurality of gate stages (104) further comprises closing a second gate stage configured to move a subset of conductors (302A) of the plurality of conductors (102) in a first direction to form at least a second row.

4. The method of claim 3, wherein said closing each gate stage (104A) of the plurality of gate stages (104) further comprises closing a third gate stage configured to move at least one conductor of the subset of conductors (302A) in a second direction transverse to the first direction.

5. The method of claim 4, wherein said closing each gate stage (104A) of the plurality of gate stages (104) further comprises closing a fourth gate stage configured to support the plurality of conductors (102).

6. The method of any one of claims 1-5, wherein said closing each gate stage (104A) of the plurality of gate stages (104) comprises pushing the plurality of conductors (102) into a gate (106A) of the gate stage (104A) using a mechanical pushing structure.

7. The method of any one of claims 1-5, wherein said closing each gate stage (104A) of the plurality of gate stages (104) comprises pushing the plurality of conductors (102) into a gate (106A) of the gate stage (104A) using one or more of a flow of gas, an electric actuator, a magnetic actuator, or a spring-driven actuator.

8. The method of any one of claims 1-7, further comprising, after moving the plurality of conductors (102) into the 2D spatial arrangement, inserting the plurality of conductors (102) into the connector (112).

9. A system for arranging a plurality of conductors (102) into a 2-dimensional, 2D, spatial arrangement for insertion into a connector (112), the system comprising:
a plurality of gate stages (104), each gate stage (104A) of the plurality of gate stages (104) comprising a gate (106A) and a pushing structure (108A); and
a controller (124) configured to control a closing of each gate stage (104A) of the plurality of gate stages (104) to cause progressive movement of the plurality of conductors (102) into the 2D spatial arrangement by the plurality of gate stages (104).

10. The system of claim 9, wherein the plurality of gate stages (104) comprises a first gate stage configured to arrange the plurality of conductors (102) into a row.

11. The system of claim 10, wherein the plurality of gate stages (104) comprises a second gate stage configured to move a subset of conductors (302A) of the plurality of conductors (102) in a first direction to form at least a second row.

12. The system of claim 11, wherein the plurality of gate stages (104) comprises a third gate stage configured to move at least one conductor of the subset of conductors (302A) in a second direction transverse to the first direction.

13. The system of any one of claims 9-12, wherein the pushing structure (108A) of each gate stage (104A) comprises a mechanical pushing structure.

14. The system of any one of claims 9-13, wherein the controller (124) configured to control the closing of each gate stage (104A) is further configured to control one or more gate actuators (120) configured to close each gate (106A) of the plurality of gate stages (104).

15. The system of any one of claims 9-14, wherein the controller (124) configured to control the closing of each gate stage (104A) is further configured to control one or more pushing structure actuators (122) configured to close each pushing structure (108A) of the plurality of gate stages (104).
